# EUROPÄISCHE PATENTSCHRIFT

(11) **EP 1 804 613 B1**
(45) Veröffentlichungstag und Bekanntmachung des Hinweises auf die Patenterteilung: **01.12.2010**
(21) Anmeldenummer: 05752348.2
(22) Anmeldetag: 24.06.2005
(51) Int. Cl.: A47B 88/04, E05C 19/02, E05B 17/00

(54) **AUSSTOSSVORRICHTUNG FÜR EIN BEWEGBARES MÖBELTEIL**
EJECTION DEVICE FOR A DISPLACEABLE FURNITURE PART
DISPOSITIF D'EJECTION POUR PIECE DE MEUBLE MOBILE

(30) Priorität: 16.08.2004 AT 13792004
(43) Veröffentlichungstag der Anmeldung: 11.07.2007
(60) Teilanmeldung: 10013678.7
(73) Patentinhaber: Julius Blum GmbH, 6973 Höchst (AT)
(72) Erfinder: GASSER, Ingo, A-6973 Höchst (AT)
(74) Vertreter: Torggler, Paul Norbert
(86) Internationale Anmeldenummer: PCT/AT2005/000227
(87) Internationale Veröffentlichungsnummer: WO 2006/017864

(56) Entgegenhaltungen:
- EP-A- 0 760 309
- EP-A- 1 314 842
- DE-U1- 20 308 256
- GB-A- 2 374 521
- US-A- 3 862 788
- US-A- 4 215 884

## Beschreibung

Die vorliegende Erfindung betrifft in einer ersten Variante eine Ausstoßvorrichtung für ein in oder an einem Möbelkorpus bewegbar gelagertes Möbelteil, mit einem schwenkbar gelagerten Hebel, wobei am freien Hebelende eine erste Laufrolle angeordnet ist.

Der Stand der Technik zeigt folgendes:

Die US 6,669,250 B1 betrifft eine Ausstoßvorrichtung für ein in oder an einem Möbelkorpus bewegbar gelagertes Möbelteil (Türe oder Schublade) mit einem schwenkbar gelagerten Hebel, wobei am freien Hebelende eine Laufrolle angeordnet ist.

Die EP 1 314 842 A1 hat eine Ausstoßvorrichtung für ein in oder an einem Möbelkorpus bewegbar gelagertes Möbelteil (Türe oder Schublade) zum Gegenstand mit einem schwenkbar gelagerten Hebel, wobei am freien Hebelende eine Laufrolle angeordnet ist.

Die EP 1 374 732 A1 betrifft eine Ausstoßvorrichtung für ein in einem Möbelkorpus bewegbar gelagertes Möbelteil (Schublade) mit einer elektrischen Antriebseinheit, einer Steuer- bzw. Regeleinrichtung zum Steuern bzw. Regeln der Antriebseinheit und einem Getriebe zur Kraftübertragung von der Antriebseinheit auf den Ausstoßer.

Die DE 29 24 145 A1 betrifft eine Ausstoßvorrichtung für einen in einem Haushaltsbackofen bewegbar gelagerten Backwagen mit einem schwenkbar gelagerten Hebel (Transporthebel) und mit einer elektrischen Antriebseinheit (Elektromotor).

Die US 4,720,154 A beschreibt im Ausführungsbeispiel nach der Fig. 10 eine Ausstoßvorrichtung für eine in einem Möbelkorpus (Geldausgabegerät) bewegbar gelagerte Schublade mit einem schwenkbar gelagerten Hebel und mit einer elektrischen Antriebseinheit (Elektromotor).

Die prioritäts-ältere WO 2004/100718 A1 hat eine Ausstoßvorrichtung für ein in oder an einem Möbelkorpus bewegbar gelagertes Möbelteil (Türe oder Schublade) zum Gegenstand mit einem schwenkbar gelagerten Hebel, mit einer elektrischen Antriebseinheit und einer Steuer- bzw. Regeleinrichtung zum Steuern bzw. Regeln der Antriebseinheit. Gattungsgemäße Ausstoßvorrichtungen haben das Problem, dass das Anfahrverhalten des durch den Hebel beaufschlagten bewegbaren Möbelteils vom Benutzer meist als äußerst träge empfunden wird. Um diesem Problem zu begegnen, ist die für den Hebel vorgesehene Antriebseinheit von der Leistung her häufig überdimensioniert ausgebildet, um über den Hebel eine schnelle anfängliche Beschleunigung des bewegbaren Möbelteils zu erzielen. Nach der anfänglichen Beschleunigung des bewegbaren Möbelteils wäre an sich eine weit geringere Antriebsleistung ausreichend.

Aufgabe der Erfindung ist es, eine Ausstoßvorrichtung zu schaffen, die dieses Problem nicht aufweist.

Dies wird erfindungsgemäß dadurch erreicht, dass am Hebel beabstandet vom freien Hebelende eine zweite Laufrolle angeordnet ist.

Durch die erfindungsgemäße Maßnahme wird eine gleichmäßige Belastung der den Hebel antreibenden Antriebseinheit über die gesamte Ausstoßstrecke erreicht. Der schwenkbar gelagerte Hebel kommt zuerst mit der beabstandet vom freien Hebelende angeordneten zweiten Laufrolle mit dem bewegbaren Möbelteil in Kontakt, wodurch das auf das bewegbare Möbelteil ausgeübte Drehmoment kleiner ist als bei sofortiger Kontaktierung mit der am freien Hebelende angeordneten Laufrolle. Dadurch wird die Antriebseinheit, welche einen Elektromotor umfassen kann, während der anfänglichen Beschleunigung des bewegbaren Möbelteils mit einem geringeren Drehmoment belastet. Hierdurch ergibt sich ein günstigeres Anfahrverhalten. Vom Benutzer wird dies als schwungvollere anfängliche Beschleunigung des bewegbaren Möbelteils wahrgenommen.

Nach der anfänglichen Beschleunigung des bewegbaren Möbelteils kommt der Hebel mit der am freien Hebelende angeordneten ersten Laufrolle mit dem bewegbaren Möbelteil in Kontakt und kann so über das größere Drehmoment (aufgrund des längeren Hebelarms) eine größere Kraft auf das bewegbare Möbelteil ausüben. Da die Trägheit des bewegbaren Möbelteils bereits überwunden ist, wird die Antriebseinheit jetzt trotz des größeren Drehmoments in etwa nur gleich stark belastet, wie während der anfänglichen Beschleunigungsphase. Insgesamt ergibt sich daher eine Gleichverteilung der Last der Antriebseinheit über die gesamte Ausstoßstrecke des bewegbaren Möbelteils.

Bei einer besonders bevorzugten Ausführungsform der Erfindung ist vorgesehen, dass die zweite Laufrolle in einem Abstand von annähernd einer halben Hebellänge vom freien Hebelende am Hebel angeordnet ist. Dies ergibt eine in der Praxis zufriedenstellende Verteilung der auf die Antriebseinheit wirkenden Lastkräfte.

Eine weitere, zweite Variante der Erfindung betrifft eine Ausstoßvorrichtung für ein in oder an einem Möbelkorpus bewegbar gelagertes Möbelteil, insbesondere nach Anspruch 1 oder 2, mit einem schwenkbar gelagerten Hebel und einer insbesondere elektrischen Antriebseinheit zum Antreiben des Hebels.

Der Betrieb derartiger Ausstoßvorrichtungen ist mit einer für den Benutzer unangenehmen Lärmentwicklung verbunden. Neben dem anfänglichen Anschlagsgeräusch, das sich bei der Kontaktierung des schwenkbar gelagerten Hebels mit dem bewegbaren Möbelteil ergibt, ist auch der weitere Betrieb der Ausstoßvorrichtung mit einer unangenehmen Lärmentwicklung verbunden.

Aufgabe dieser Variante der Erfindung ist es, eine gattungsgemäße Ausstoßvorrichtung zu schaffen, die sich durch eine geringere Lärmentwicklung auszeichnet.

Dies wird erfindungsgemäß dadurch erreicht, dass der Hebel wenigstens einen ersten Hebelteil und einen zweiten Hebelteil aufweist, wobei der erste Hebelteil mit dem bewegbaren Möbelteil kontaktierbar ist und der zweite Hebelteil durch die Antriebseinheit antreibbar ist und dass der erste Hebelteil mit dem zweiten Hebelteil begrenzt bewegbar gekoppelt ist, wobei der erste Hebelteil in Bezug auf den zweiten Hebelteil durch einen Kraftspeicher vorgespannt ist.

Durch die zweiteilige Ausführung des Hebels ergibt sich ein Spiel zwischen dem ersten und dem zweiten Hebelteil. Durch die Vorspannung des ersten Hebelteils in Bezug auf den zweiten Hebelteil wird der erste Hebelteil an das bewegbare Möbelteil angepresst. Durch die Reaktionskraft wird der zweite Hebelteil vom ersten Hebelteil weggedrückt, wodurch auch die mit dem zweiten Hebelteil in Kontakt stehenden Teile der Antriebseinheit unter Spannung gesetzt werden. Überraschenderweise hat sich herausgestellt, dass dies zu einer Verringerung des Betriebslärms der Ausstoßvorrichtung führt.

Bei einer vorteilhaften Ausführungsform dieser Variante der Erfindung ist vorgesehen, dass der erste Hebelteil in Bezug auf den zweiten Hebelteil durch eine Feder vorgespannt ist. Dies stellt eine konstruktiv besonders einfache Realisierung der erfindungsgemäßen Maßnahme dar.

Eine weitere, dritte Variante der Erfindung betrifft eine Ausstoßvorrichtung für ein in oder an einem Möbelkorpus bewegbar gelagertes Möbelteil, insbesondere nach einem der Ansprüche 1 bis 4, mit einem schwenkbar gelagerten Hebel zum Ausstoßen des bewegbaren Möbelteils, einer insbesondere elektrischen Antriebseinheit zum Antreiben des Hebels und einer Steuer- bzw. Regeleinrichtung zum Steuern bzw. Regeln der Antriebseinheit.

Bei derartigen Ausstoßvorrichtungen stellt sich das Problem der optimalen Auslösung der Ausstoßvorrichtung durch den Benutzer. In dieser Hinsicht ist eine möglichst intuitive Bedienbarkeit der Ausstoßvorrichtung von Vorteil.

Aufgabe dieser Variante der Erfindung ist es daher, eine Ausstoßvorrichtung zu schaffen, die sich durch eine intuitive Auslösbarkeit auszeichnet.

Dies wird erfindungsgemäß dadurch erreicht, dass am oder im Hebel ein Schalter zum Auslösen der Ausstoßvorrichtung angeordnet ist, wobei die Signale des Schalters wenigstens der Steuer- bzw. Regeleinrichtung zuführbar sind.

Die erfindungsgemäße Maßnahme gestattet die Auslösung der Ausstoßvorrichtung durch ein Andrücken der Frontblende des bewegbaren Möbelteils in den Möbelkorpus hinein. Hierfür ist natürlich in der geschlossenen Endlage des bewegbaren Möbelteils genügend Spiel zu lassen. Sobald das bewegbare Möbelteil den am Hebel angeordneten Schalter kontaktiert, sendet der Schalter das Auslösesignal an die Steuer- bzw. Regeleinrichtung der Ausstoßvorrichtung.

Eine besonders vorteilhafte Ausführungsform dieser Variante der Erfindung ergibt sich bei einer Kombination mit der zweiten Variante der Erfindung. Weist der Hebel wenigstens einen ersten und einen zweiten Hebelteil auf, so kann nämlich vorgesehen sein, dass der Schalter wenigstens zwei Kontakte aufweist, wobei der erste Kontakt am ersten Hebelteil und der zweite Kontakt am zweiten Hebelteil angeordnet ist.

Durch ein Andrücken des bewegbaren Möbelteils in den Möbelkorpus hinein, wird der am bewegbaren Möbelteil anliegende erste Hebelteil in Richtung des zweiten Hebelteils gedrückt, wodurch sich die beiden Kontakte berühren und den Stromkreis schließen.

Vorzugsweise ist dabei zwischen den beiden Hebelteilen zur Erzeugung einer Vorspannung ein Kraftspeicher angeordnet.

Alternativ könnte natürlich auch vorgesehen sein, dass der Schalter einen Druckschalter umfasst, der vorzugsweise am freien Hebelende angeordnet ist. Eine zweiteilige Ausführung des Hebels kann bei dieser Ausführungsform entfallen.

Eine weitere, vierte Variante der Erfindung betrifft eine Ausstoßvorrichtung für ein in oder an einem Möbelkorpus bewegbar gelagertes Möbelteil, insbesondere nach einem der Ansprüche 1 bis 8, mit einem Ausstoßer zum Ausstoßen des bewegbaren Möbelteils, einer insbesondere elektrischen Antriebseinheit, einem Getriebe zur Kraftübertragung von der Antriebseinheit auf den Ausstoßer und einer Steuer- bzw. Regeleinrichtung zum Steuern bzw. Regeln der Antriebseinheit.

Bei derartigen Ausstoßvorrichtungen ist es häufig wünschenswert, die Position des Ausstoßers zu kennen, um beispielsweise das Ausstoßprofil in Abhängigkeit von der Position gestalten zu können. Ebenso kann vorgesehen sein, die Ausstoßvorrichtung bei einer anfänglichen, durch einen Benutzer verursachten Verschiebung des bewegbaren Möbelteils und damit des Ausstoßers auszulösen.

Aufgabe dieser Variante der Erfindung ist es daher, eine Ausstoßvorrichtung zu schaffen, bei der die Position des Ausstoßers feststellbar ist.

Dies wird erfindungsgemäß dadurch erreicht, dass die Ausstoßvorrichtung ein Potentiometer umfasst, wobei die Signale des Potentiometers wenigstens der Steuer- bzw. Regeleinrichtung zuführbar sind und dass das Stellglied des Potentiometers mit dem Getriebe gekoppelt ist.

Alle Potentiometer haben gegenüber anderen Wegmesseinrichtungen den Vorteil, dass sie die Position des Ausstoßers absolut messen, wodurch keine Notwendigkeit zur Initialisierung der Wegmesseinrichtung besteht.

Ist vorgesehen, dass der Ausstoßer einen Hebel umfasst, so ist es besonders vorteilhaft, wenn weiters vorgesehen ist, dass der Abtrieb des Getriebes einstückig mit dem Hebel ausgebildet ist.

In diesem Fall kann das Stellglied des Potentiometers direkt mit dem Hebel gekoppelt sein. Dies weist unter anderem den Vorteil auf, dass, falls vorgesehen ist, dass das Getriebe eine Rutschkupplung umfasst, trotz eines Durchrutschens des Hebels die Position des Hebels korrekt bestimmt werden kann.

Insbesondere bei einem schwenkbar gelagerten Hebel ist es zur Vermeidung einer Bewegungsumwandlung besonders vorteilhaft, wenn vorgesehen ist, dass das Potentiometer als Drehpotentiometer ausgebildet ist.

Eine weitere, fünfte Variante der Erfindung betrifft eine Ausstoßvorrichtung für ein in oder an einem Möbelkorpus bewegbar gelagertes Möbelteil, insbesondere nach einem der Ansprüche 1 bis 13, mit einem Ausstoßer zum Ausstoßen des bewegbaren Möbelteils, einer insbesondere elektrischen Antriebseinheit und einem Getriebe zur Kraftübertragung von der Antriebseinheit auf den Ausstoßer.

Derartige Ausstoßvorrichtungen haben das Problem, dass es häufig zu einer Beschädigung des Getriebes in Folge einer missbräuchlichen Benutzung der Ausstoßvorrichtung kommt. Beispielsweise werden ausgestoßene bewegbare Möbelteile vom Benutzer zum Schließen oft mit einer beträchtlichen Kraftentwicklung in Richtung des Möbelkorpus gestoßen. Trifft das bewegbare Möbelteil auf den Ausstoßer der Ausstoßvorrichtung, so überträgt sich diese Kraft auf das Getriebe der Ausstoßvorrichtung, was im schlimmsten Fall zu deren Zerstörung führen kann.

Aufgabe der Erfindung ist es daher, eine gattungsgemäße Ausstoßvorrichtung zu schaffen, die dieses Problem nicht aufweist.

Dies wird erfindungsgemäß dadurch erreicht, dass das Getriebe eine Rutschkupplung umfasst.

Übersteigt die vom Ausstoßer auf das Getriebe übertragene Kraftentwicklung einen durch die konstruktive Ausführung der Rutschkupplung bedingten Grenzwert, so kommt es zu einem Durchrutschen des mit der Rutschkupplung gekoppelten Getriebeteils, was eine Beschädigung des Getriebes verhindert.

Die vorliegende Erfindung betrifft auch ein Möbel mit einem bewegbaren Möbelteil, insbesondere Schublade oder Türe, mit einer Ausstoßvorrichtung nach einer der vorgenannten Varianten der Erfindung.

Zur Auslösung der Ausstoßvorrichtung kann die Anordnung einer Wegmesseinrichtung am bzw. im Möbel vorgesehen sein, wobei die Ausstoßvorrichtung durch die Wegmesseinrichtung auslösbar ist.

Um einen möglichst einfachen Einbau in ein erfindungsgemäßes Möbel zu erlauben, ist es besonders vorteilhaft, wenn vorgesehen ist, dass die Wegmesseinrichtung an bzw. in der Ausstoßvorrichtung angeordnet ist.

Es kann aber auch vorgesehen sein, dass die Wegmesseinrichtung am bzw. im Möbelkorpus angeordnet ist.

Eine mögliche Ausführungsform der Erfindung, welche sich durch ihre Einfachheit auszeichnet, sieht vor, dass die Wegmesseinrichtung einen vom bewegbaren Möbelteil beaufschlagbaren Stößel umfasst.

Soll die Ausstoßvorrichtung durch eine vom Benutzer auf das bewegbare Möbelteil aufgebrachte Zugkraft auslösbar sein, so kann vorteilhafterweise vorgesehen sein, dass die Wegmesseinrichtung einen mit dem bewegbaren Möbelteil koppelbaren Mitnehmer aufweist.

Die Wegmesseinrichtung kann sowohl als absolute Messeinrichtung, als auch als inkrementelle Messeinrichtung ausgebildet sein.

Im ersten Fall kann die Wegmesseinrichtung beispielsweise ein Potentiometer umfassen. Im zweiten Fall kann die Wegmesseinrichtung beispielsweise einen Encoder umfassen.

Weitere Vorteile und Einzelheiten der Erfindung ergeben sich anhand der nachfolgenden Figurenbeschreibung. Dabei zeigen:
- Fig. 1 bis 3: Darstellungen eines Ausführungsbeispiels der ersten Variante der Erfindung in Draufsicht sowie in perspektivischer Ansicht bei verschiedenen Stellungen des Hebels der Ausstoßvorrichtung,
- Fig. 4 bis 5: ein Ausführungsbeispiel der zweiten Variante der Erfindung in verschiedenen Ansichten,
- Fig. 6a bis 6d: Ansichten eines Ausführungsbeispiels der dritten Variante der Erfindung,
- Fig. 7a bis 7d: ein weiteres Ausführungsbeispiel der dritten Variante der Erfindung,
- Fig. 8 bis 9: verschiedene Ansichten eines Ausführungsbeispiels der vierten Variante der Erfindung,
- Fig. 10 bis 11: verschiedene Ansichten eines Ausführungsbeispiels der fünften Variante der Erfindung,
- Fig. 12: die perspektivische Ansicht eines weiteren Ausführungsbeispiels einer erfindungsgemäßen Ausstoßvorrichtung,
- Fig. 13: die in Fig. 12 gezeigte Ausstoßvorrichtung in Explosionsdarstellung,
- Fig. 14: einige Komponenten der in Fig. 13 dargestellten Ausstoßvorrichtung in perspektivischer Ansicht sowie in Explosionsdarstellung,
- Fig. 15a bis 15c: eine Schnittdarstellung eines weiteren Ausführungsbeispiels einer erfindungsgemäßen Ausstoßvorrichtung,
- Fig. 16: eine Explosionsdarstellung der in Fig. 15 dargestellten Ausstoßvorrichtung,
- Fig. 17: eine Explosionsdarstellung eines weiteren Ausführungsbeispiels einer erfindungsgemäßen Ausstoßvorrichturig,
- Fig. 18a bis 18d: ein Ausführungsbeispiel eines erfindungsgemäßen Möbels,
- Fig. 19a bis 19c: ein Ausführungsbeispiel einer Wegmesseinrichtung in zwei perspektivischen Ansichten sowie in einer Explosionsansicht,
- Fig. 20a bis 20c: in perspektivischer Ansicht ein weiteres Ausführungsbeispiel einer erfindungsgemäßen Ausstoßvorrichtung und
- Fig. 21 a bis 21c: eine Draufsicht auf die in Fig. 20 dargestellte Ausstoßvorrichtung.

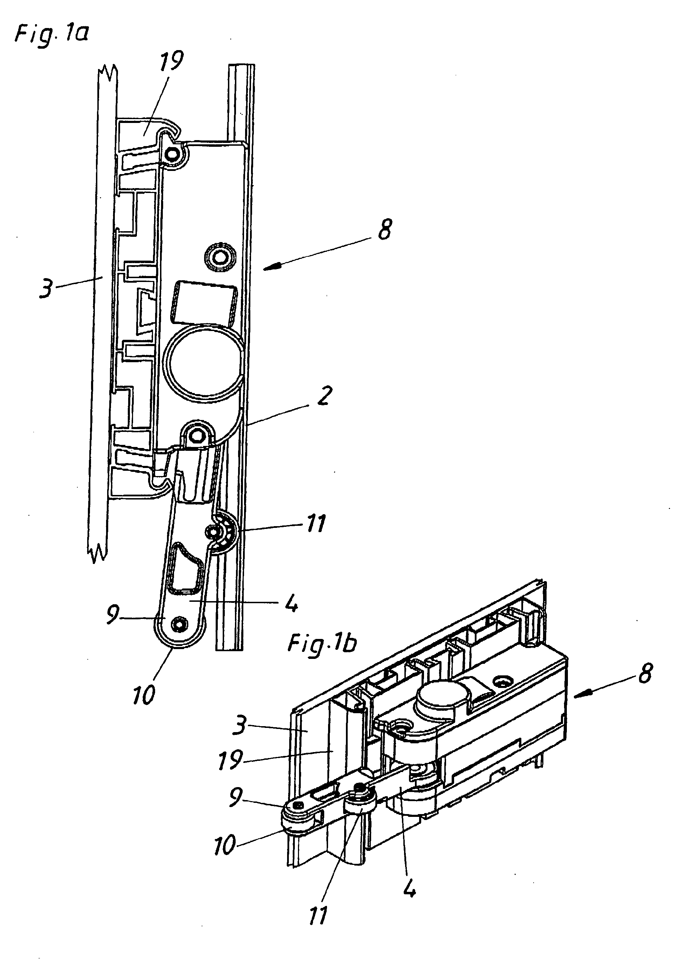

Fig. 1a zeigt in Draufsicht ein Ausführungsbeispiel einer erfindungsgemäßen Ausstoßvorrichtung 8, welche über eine Trägerschiene 19 an einem Möbelkorpus 3 befestigt ist. Die Ausstoßvorrichtung 8 weist dabei einen schwenkbar gelagerten Hebel 4 auf, wobei am freien Hebelende 9 eine erste Laufrolle 10 und zusätzlich auf annähernd halber Strecke zwischen dem Anlenkpunkt des Hebels 4 und dem freien Hebelende 9 eine zweite Laufrolle 11 angeordnet ist. Bei dem in Fig. 1a dargestellten Zustand befindet sich das bewegbare Möbelteil 2, von dem hier nur die Rückblende dargestellt ist, in seiner geschlossenen Endlage im Möbelkorpus 3, wodurch der Hebel 4 mit der zweiten Laufrolle 11 am bewegbaren Möbelteil 2 anliegt.

Fig. 1b zeigt eine perspektivische Ansicht der Ausstoßvorrichtung 8, wobei der besseren Übersichtlichkeit halber das bewegbare Möbelteil 2 nicht dargestellt wurde.

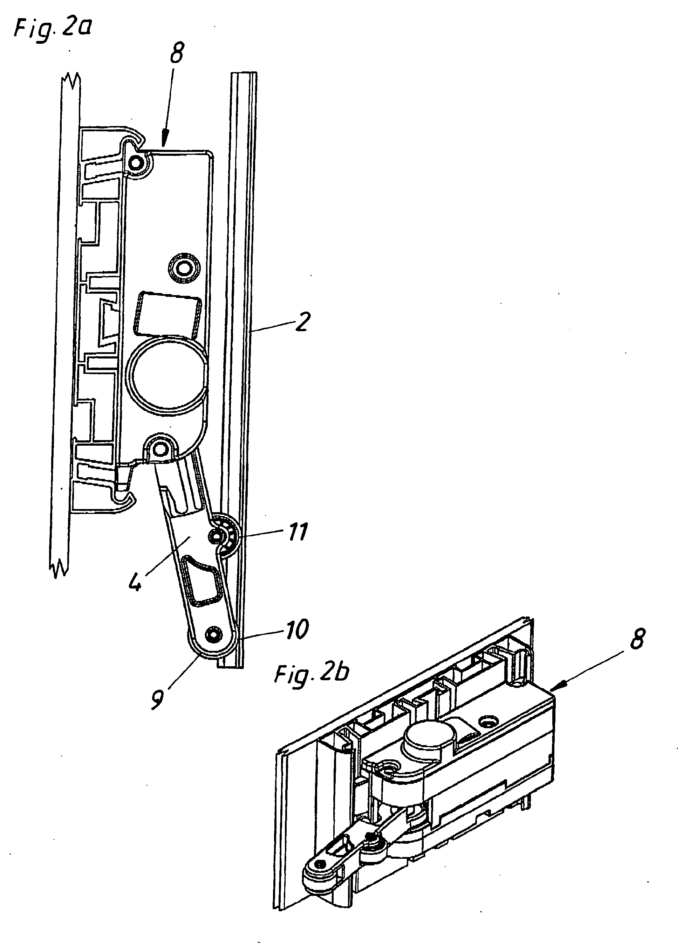

In Fig. 2a wurde das bewegbare Möbelteil 2 durch den Hebel 4 bereits so weit aus seiner geschlossenen Endlage im Möbelkorpus 3 herausbewegt, dass nun auch die am freien Hebelende 9 angeordnete erste Laufrolle 10 mit dem bewegbaren Möbelteil 2 in Kontakt kommt.

Fig. 2b stellt eine perspektivische Ansicht der Ausstoßvorrichtung 8 in diesem Zustand dar.

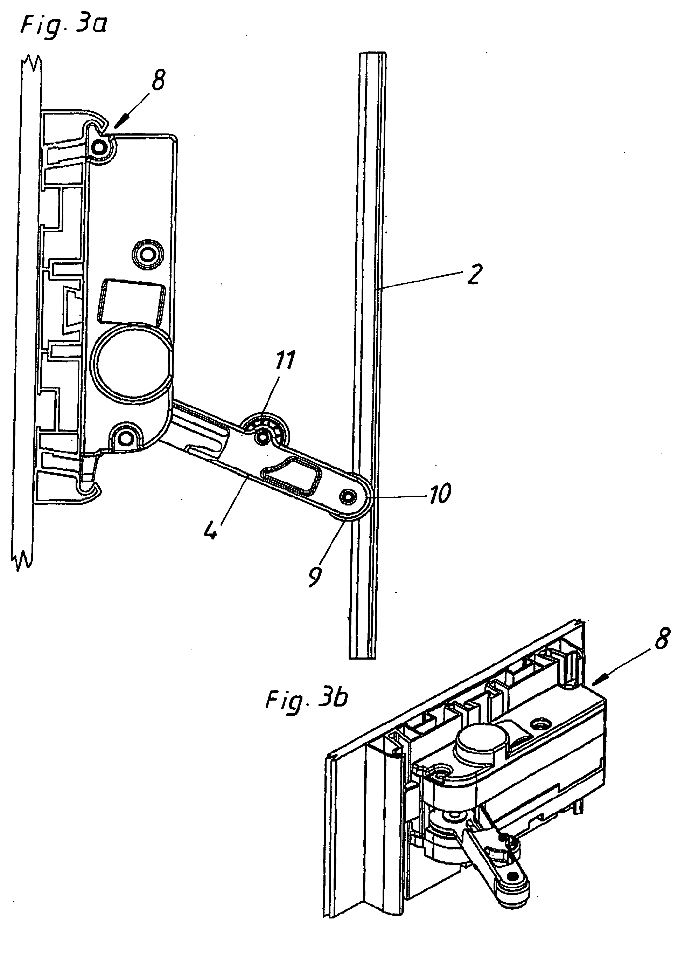

Die Fig. 3a und 3b zeigen die Situation, kurz bevor sich das bewegbare Möbelteil 2 vollständig vom Hebel 4 wegbewegt. Der Hebel 4 ist nunmehr über die am freien Hebelende 9 angeordnete ersten Laufrolle 10 mit dem bewegbaren Möbelteil 2 in Kontakt, während die zweite Laufrolle 11 das bewegbare Möbelteil 2 nicht mehr kontaktiert.

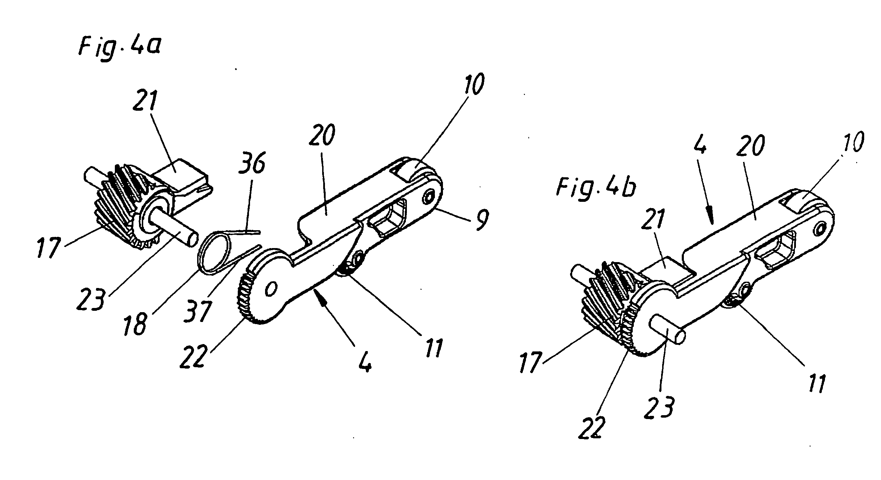

Die Fig. 4a und 4b zeigen einen erfindungsgemäßen Hebel 4, der aus einem ersten Hebelteil 20 und einem zweiten Hebelteil 21 besteht. Der zweite Hebelteil 21 ist einstückig mit dem Abtrieb 17 eines in Fig. 4 nicht dargestellten Getriebes 13 ausgebildet. Am ersten Hebelteil 20 ist am freien Hebelende 9 eine Laufrolle 11 zur Beaufschlagung eines in Fig. 4 nicht dargestellten bewegbaren Möbelteils 2 vorgesehen. Weiters ist annähernd in der Mitte des Hebels 4 eine zweite Laufrolle 10 angeordnet. Zwischen dem ersten Hebelteil 20 und dem zweiten Hebelteil 21 ist eine Feder 18 angeordnet, welche sich mit ihrem einen Federende 36 am zweiten Hebelteil 21 und mit ihrem anderen Federende 37 am ersten Hebelteil 20 abstützt. Dadurch wird das zweite Hebelteil 20 in Bezug auf das erste Hebelteil 21 vorgespannt. In diesem Ausführungsbeispiel ist am ersten Hebelteil 20 ein Antriebsrad 22 für ein in Fig. 4 nicht näher dargestelltes Potentiometer 15 zur Positionsbestimmung des Hebels 4 ausgebildet.

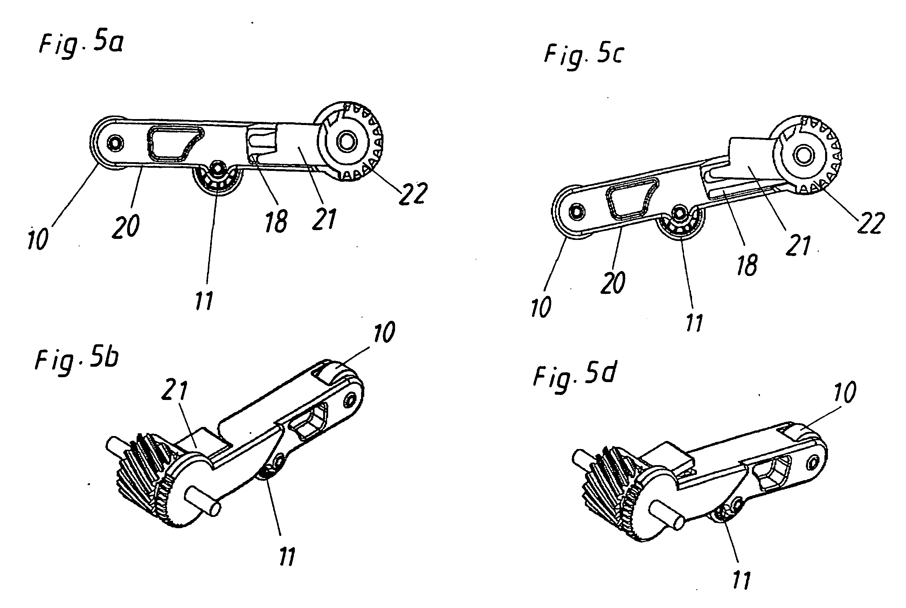

Fig. 5c zeigt die jeweilige Lage des ersten Hebelteils 20 und des zweiten Hebelteils 21, die vorliegen, wenn sich das in Fig. 5 nicht dargestellte bewegbare Möbelteil 2 in seiner geschlossenen Endlage befindet. Die Laufrolle 10 liegt dabei an der Rückblende des bewegbaren Möbelteils 2 an. In Fig. 5a wurde das zweite Hebelteil 21 über den Abtrieb 22 eines in Fig. 5 nicht dargestellten Getriebes 13 angetrieben bewegt, um eine Ausstoßung des bewegbaren Möbelteils 2 zu erzielen. Der zweite Hebelteil 20 liegt dadurch am ersten Hebelteil 21 an. Die Feder 18 unterstützt dabei den Ausstoßvorgang des bewegbaren Möbelteils 2. Die Fig. 5b und 5d zeigen perspektivische Ansichten zu den Fig. 5a und 5c.

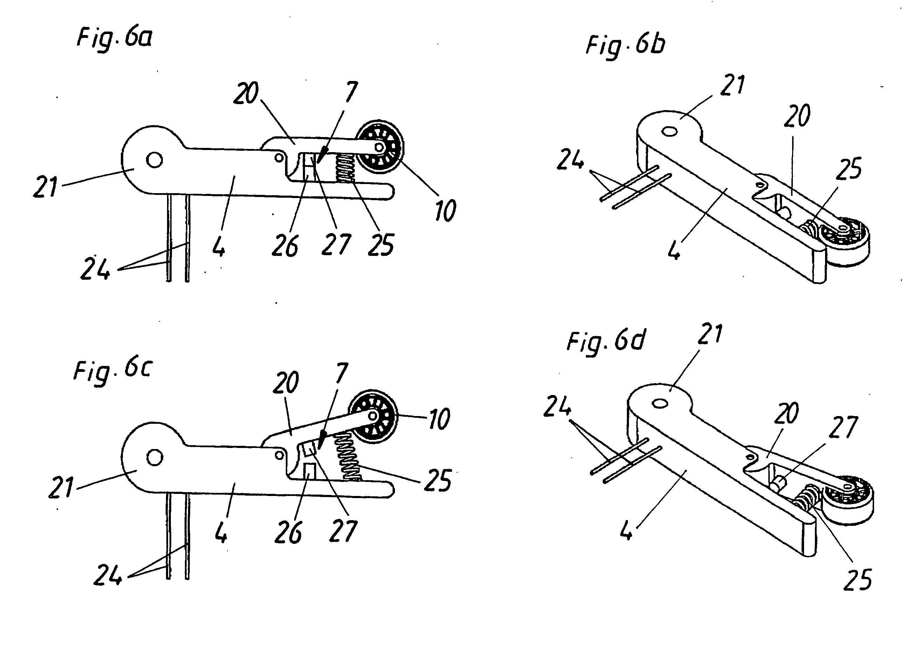

Die Fig. 6a bis 6d zeigen ein erstes Ausführungsbeispiel der dritten Variante der Erfindung, welche sich durch einen im Hebel 4 angeordneten Schalter 7 auszeichnet. Wie in dem vorbesprochenen Ausführungsbeispiel weist der Hebel 4 einen ersten Hebelteil 20 zur Kraftbeaufschlagung eines in Fig. 6 nicht dargestellten bewegbaren Möbelteils 2 und einen zweiten Hebelteil 21, welcher mit einer ebenfalls nicht dargestellten Antriebseinheit 5 in Verbindung steht, auf. Eine Feder 25 ist zwischen den beiden Hebelteilen 20, 21 angeordnet. Am ersten Hebelteil 20 ist eine Laufrolle 10 angeordnet. Der Schalter 7 umfasst einen am ersten Hebelteil 20 angeordneten ersten Kontakt 27 und einen am zweiten Hebelteil 21 angeordneten zweiten Kontakt 26. Bei dem in den Fig. 6c und 6d dargestellten Zustand sind die beiden Kontakte 26, 27 voneinander abgehoben. Dies entspricht der inaktiven Stellung des Schalters 7. Durch einen nicht dargestellten Benutzer wird das ebenfalls nicht dargestellte Möbelteil 2 in Schließrichtung, das heißt in den nicht dargestellten Möbelkorpus 3 hineinbewegt. Dadurch wird der erste Hebelteil 20 gegen die Kraftbeaufschlagung der Feder 25 bewegt. Dadurch kommen die beiden Kontakte 26, 27 in Berührung, was einen der Übersichtlichkeit halber nicht näher dargestellten Stromkreis schließt, wodurch über die Leitungen 24 ein Auslösesignal an die Antriebseinheit 5 weitergegeben wird.

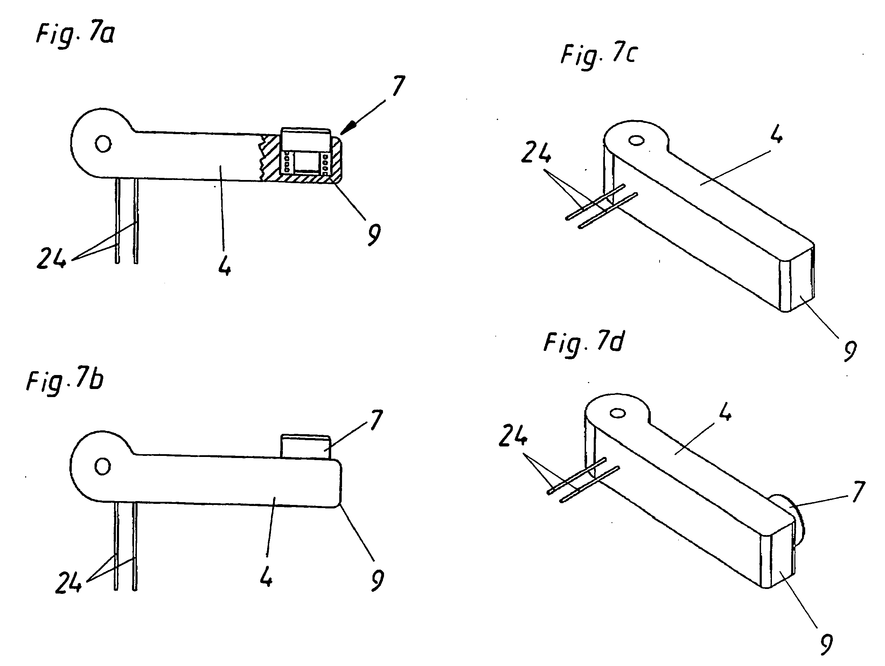

Die Fig. 7a bis 7d zeigen ein zweites Ausführungsbeispiel der dritten Variante der Erfindung, bei dem der Hebel 4 einstückig ausgebildet ist. Der Schalter 7 ist in diesem Ausführungsbeispiel als ein am freien Hebelende 9 angeordneter Druckschalter ausgebildet.

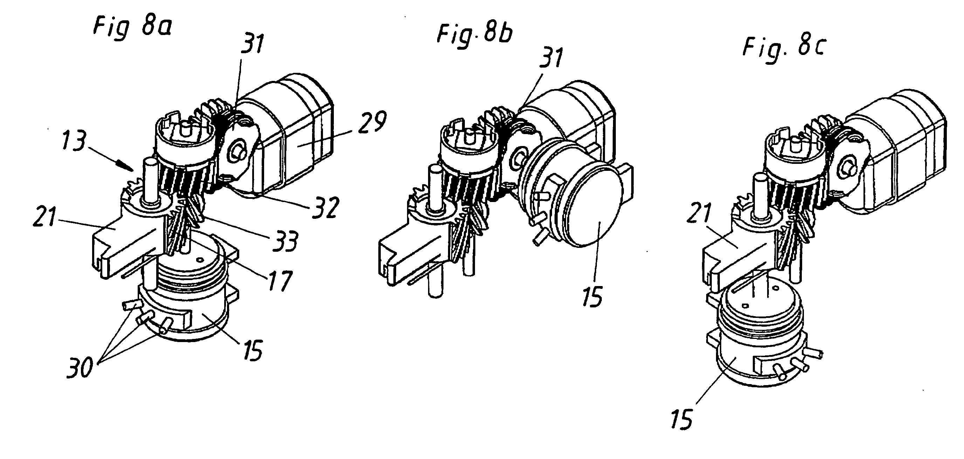

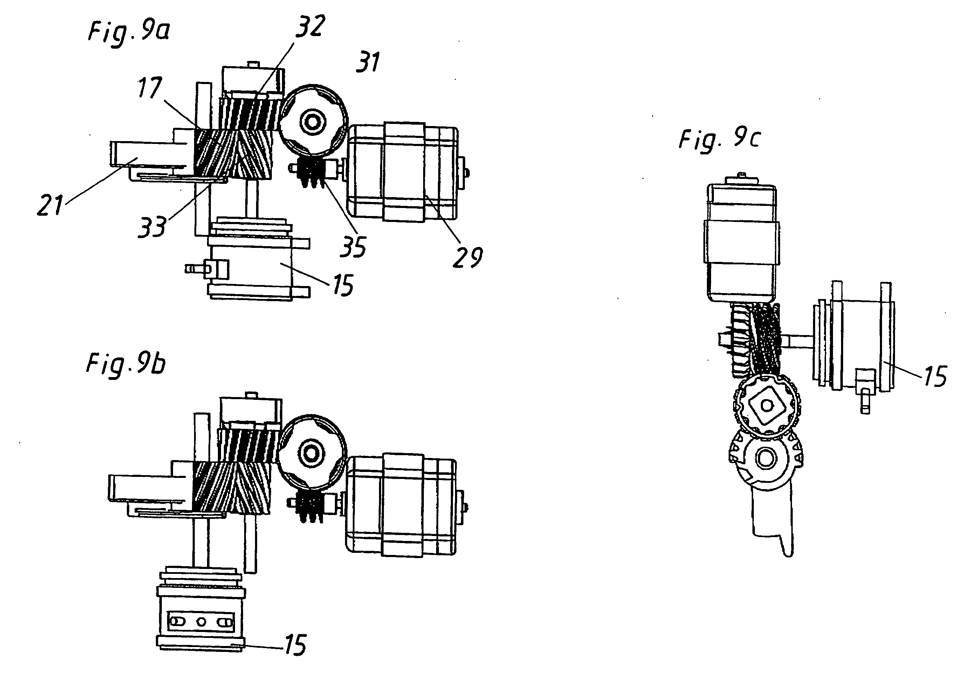

Die Fig. 8a bis 8c zeigen verschiedene Ausführungsbeispiele der vierten Variante der Erfindung. Dargestellt ist ein Getriebe 13, welches zur Kraftübermittlung von dem Elektromotor 29 auf den zweiten Hebelteil 21 dient. Die Kraftübermittlung erfolgt dabei über eine in den Fig. 8 nicht erkennbare Spindel 35 (erkennbar in den Fig. 9a und 9b), das Zahnrad 31, das weitere Zahnrad 33 und schließlich den Abtrieb 17 des Getriebes, der in diesem Ausführungsbeispiel einstückig mit dem zweiten Hebelteil 21 ausgebildet ist. Erfindungsgemäß ist in jeder der Fig. 8a bis 8c ein Potentiometer 15 (hier: Drehpotentiometer) mit dem Getriebe 13 verbunden. Das Potentiometer 15 weist dabei drei Kontakte 30 zum Anschluss bzw. zum Abgreifen von elektrischer Spannung auf. Bei dem in Fig. 8a dargestellten Ausführungsbeispiel ist das Potentiometer 15 über eine gemeinsame Achse mit der mittleren Stufe des Getriebes 13 verbunden. Bei dem in Fig. 8b dargestellten Ausführungsbeispiel ist das Potentiometer 15 mit dem Zahnrad 31 verbunden. Bei dem besonders bevorzugten Ausführungsbeispiel der Fig. 8c ist das Potentiometer 15 mit dem zweiten Hebelteil 21 verbunden.

Die Fig. 9a bis 9c zeigen alternative Ansichten zu den in den Fig. 8a bis 8c dargestellten Ausführungsbeispielen.

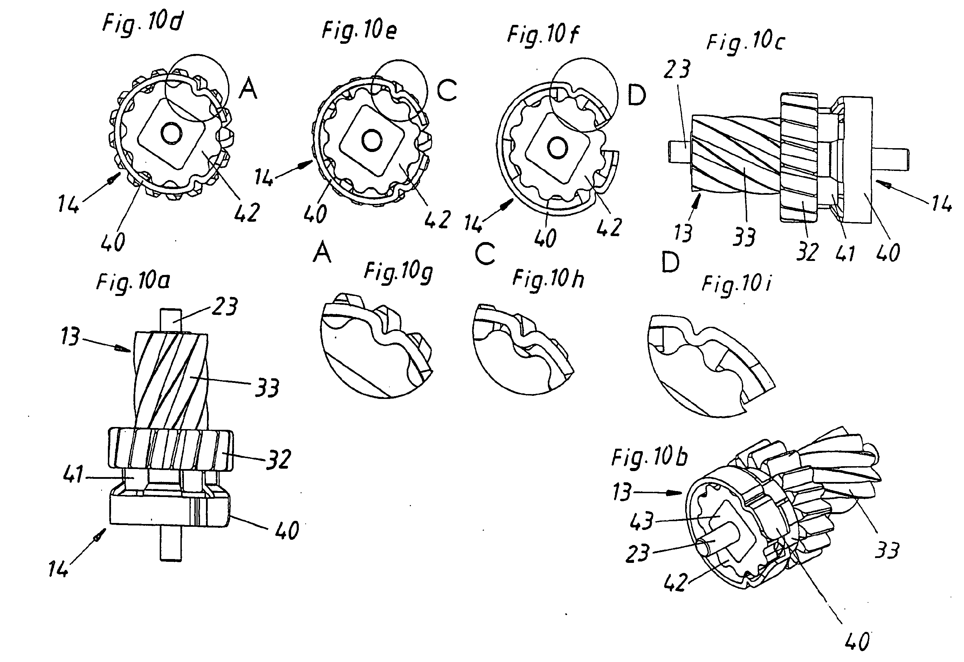

Die Fig. 10a bis 10f zeigen ein Ausführungsbeispiel der fünften Variante der Erfindung. Fig. 10a zeigt in einer Seitenansicht einen Teil eines Getriebes 13, welches eine Rutschkupplung 14 umfasst. Die Rutschkupplung 14 besteht in diesem Ausführungsbeispiel aus einem Federring 41, welcher sich bei übermäßiger Belastung aufweitet und über die Mitnahmenocken 42 gleitet. Dieser Vorgang ist beispielhaft in den Fig. 10d bis 10f dargestellt. Die Fig. 10g bis 10i zeigen jeweils Detaildarstellungen zu diesem Vorgang. Fig. 10b zeigt eine perspektivische Ansicht des Teils des Getriebes 13.

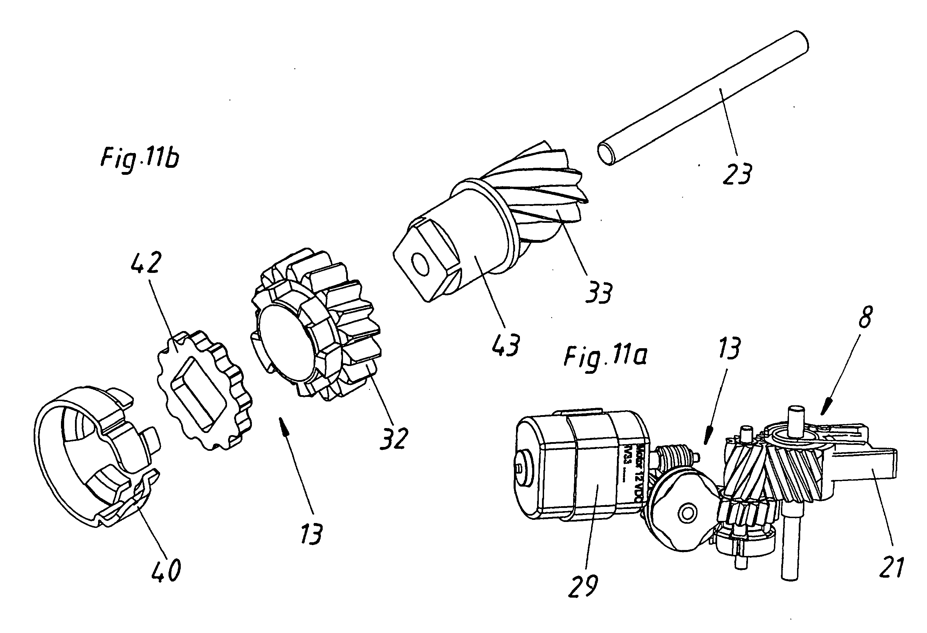

Der Aufbau des in den Fig. 10a bis 10i dargestellten Teils des Getriebes 13 geht insbesondere aus der Explosionsdarstellung der Fig. 11b hervor. Auf einem gemeinsamen Stift 23 sind dabei das Zahnrad 33, das weitere Zahnrad 32, welches drehfest mit dem Federring 40 verbunden ist, und die Mitnahmenocken 42 angeordnet. Die Mitnahmenocken 42 sind formschlüssig auf den als Bolzen 43 ausgebildeten Teil des Zahnrads 33 aufgesteckt. Die Fig. 11a zeigt eine perspektivische Ansicht des vollständigen Getriebes 13, welches von einem Elektromotor 29 angetrieben wird und seinerseits den zweiten Hebelteil 21 antreibt.

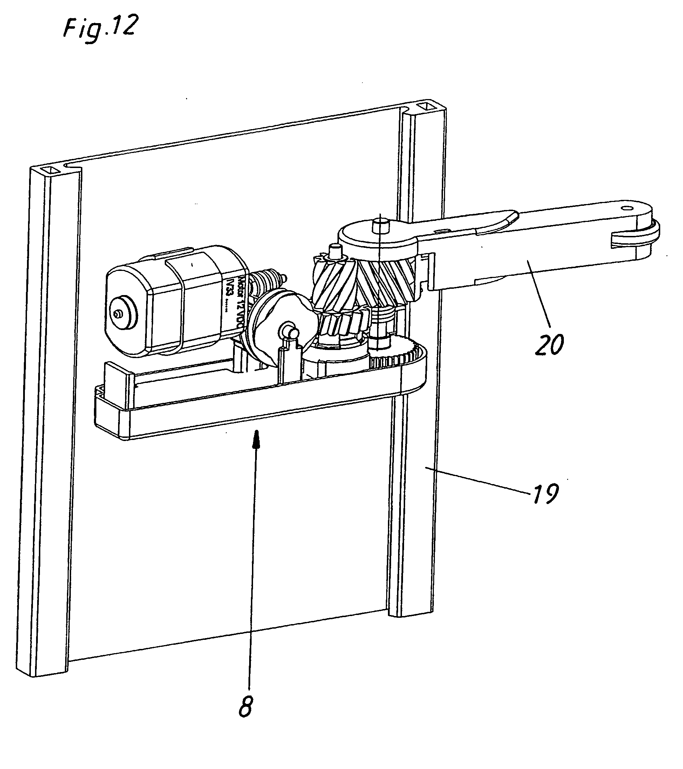

Die Fig. 12 zeigt die in Fig. 11 dargestellte Ausstoßvorrichtung 8 mit dem ersten Hebelteil 20 bei teilweise entferntem Gehäuse in ihrer Befestigung an einer Trägerschiene 19.

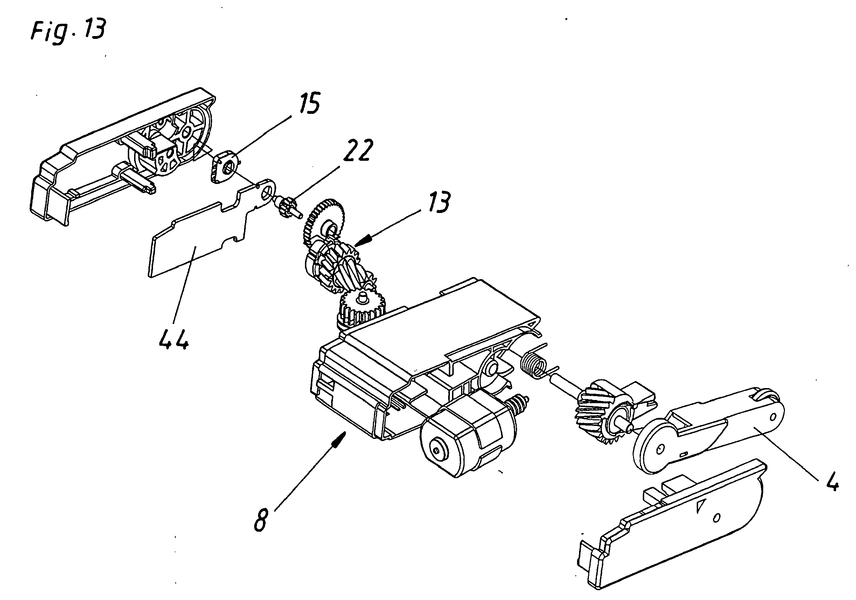

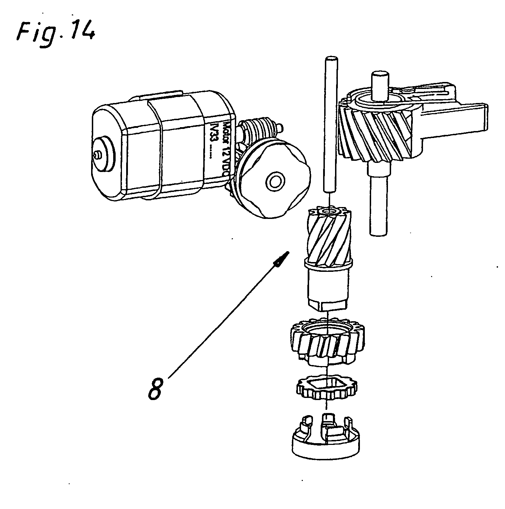

Fig. 13 zeigt eine weitere Explosionsdarstellung der in den Fig. 11a und 12 dargestellten Ausstoßvorrichtung 8, wobei auch das Gehäuse der Ausstoßvorrichtung 8 vollständig erkennbar ist. Weiters ist in Fig. 13 die Anordnung eines Potentiometers 15 direkt auf einer Platine 44, welche alle Schaltkreise der Ausstoßvorrichtung 8 beherbergt, erkennbar. Über den Abtrieb 22 steht das Potentiometer 15 mit dem Getriebe 13 in Verbindung und dient der Positionsmessung des Hebels 4. Fig. 14 zeigt eine weitere Explosionsdarstellung des Antriebsmechanismus der dargestellten Ausstoßvorrichtung 8.

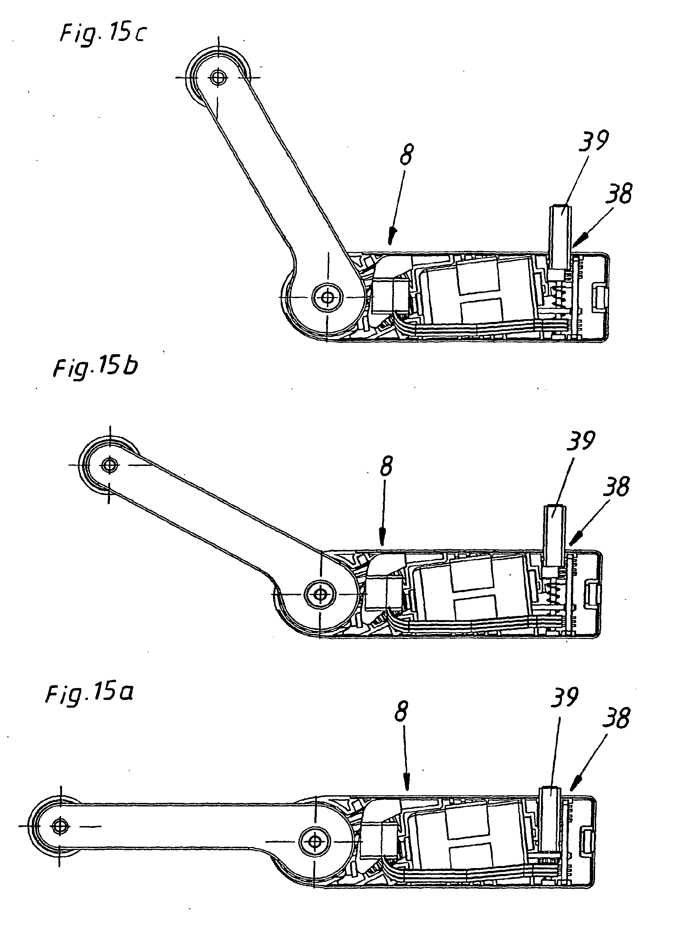

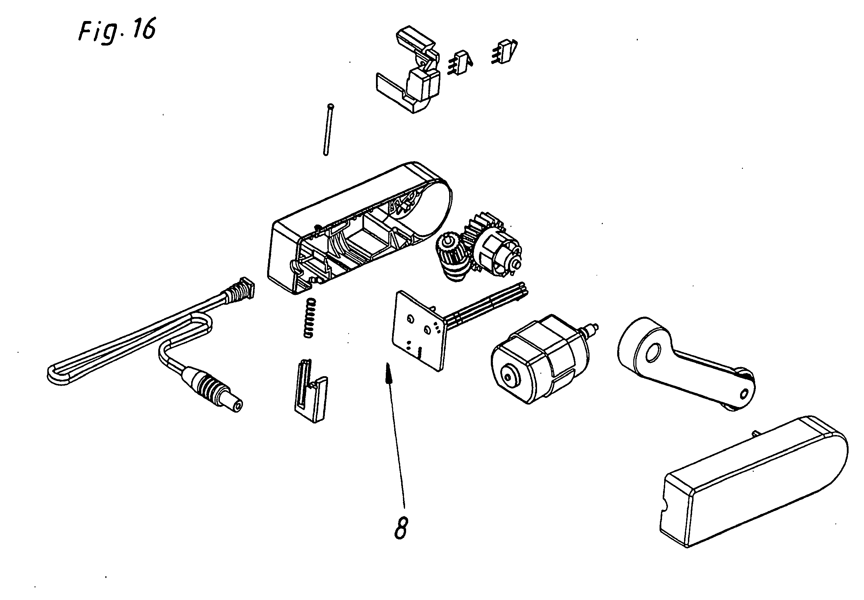

In den Fig. 15a bis 15c ist ein weiteres Ausführungsbeispiel einer erfindungsgemäßen Ausstoßvorrichtung 8 dargestellt, welches sich insbesondere durch die mit dem Bezugszeichen 38 versehene Wegemesseinrichtung auszeichnet. Die Wegmesseinrichtung 38 weist einen von einem nicht dargestellten bewegbaren Möbelteil 2 beaufschlagbaren federbelasteten Stößel 39 auf. In Fig. 15a wurde der Stößel 39 durch das nicht dargestellte bewegbare Möbelteil 2 in das Gehäuse der Ausstoßvorrichtung 8 eingedrückt, was den Ausstoßvorgang auslöst. Diese Ausstoßvorrichtung ist in Fig. 16 in einer Explosionsdarstellung übersichtlich dargestellt.

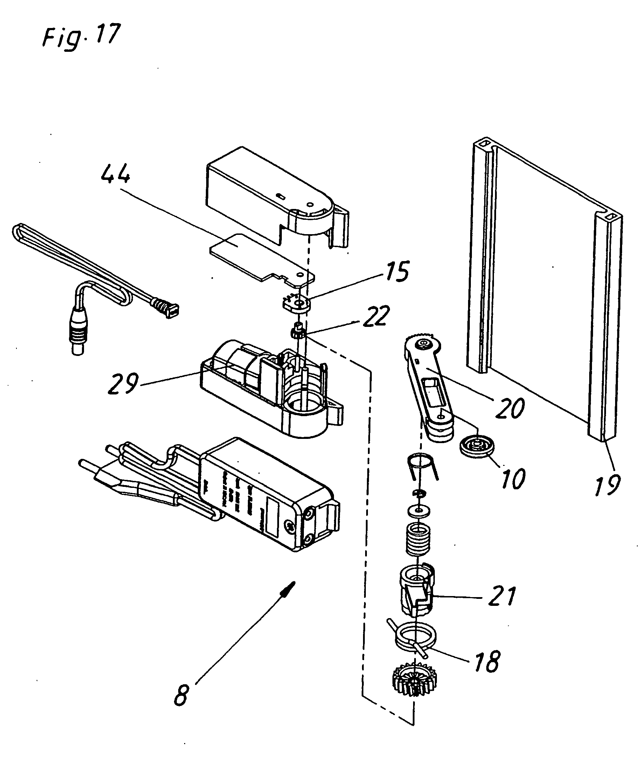

Die Fig. 17 zeigt die Explosionsdarstellung eines weiteren Ausführungsbeispiels einer erfindungsgemäßen Ausstoßvorrichtung 8, welches sich von dem beispielsweise in Fig. 13 dargestellten Ausführungsbeispiel nur dadurch unterscheidet, dass eine Getriebestufe weniger vorgesehen ist.

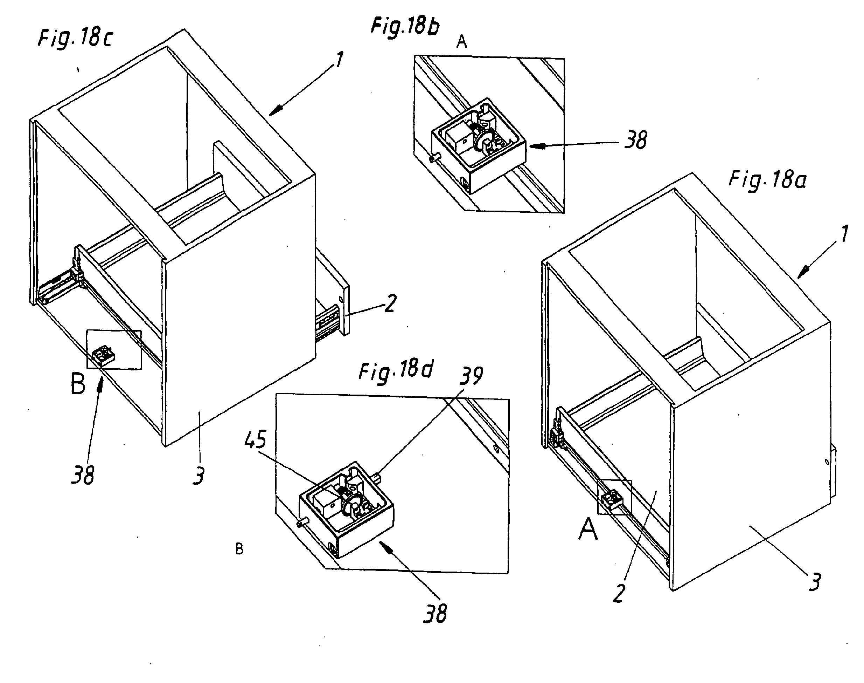

In den Fig. 18a bis 18d ist ein Möbel 1 mit einem als Schublade ausgebildeten bewegbaren Möbelteil 2 dargestellt. Erkennbar ist eine am Möbelkorpus 3 befestigte Wegmesseinrichtung 38, welche einen Encoder 45 umfasst. Ein Stößel 39 ist durch die Rückseite des bewegbaren Möbelteils 2 kraftbeaufschlagbar. In der in Fig. 18a dargestellten Stellung ist das Stößel 39 durch das sich in seiner geschlossenen Endlage befindende bewegbaren Möbelteil 2 eingedrückt. Eine geringfügige Herausbewegung des bewegbaren Möbelteils 2 aus seiner geschlossenen Endlage durch einen Benutzer gestattet die Herausbewegung des federbeaufschlagten Stößels 39, was vom Encoder 45 registriert wird. Die Wegmesseinrichtung 38 erteilt daraufhin einer in Fig. 18 nicht dargestellten Ausstoßvorrichtung 8 den Befehl zum Ausstoßen des bewegbaren Möbelteils 2.

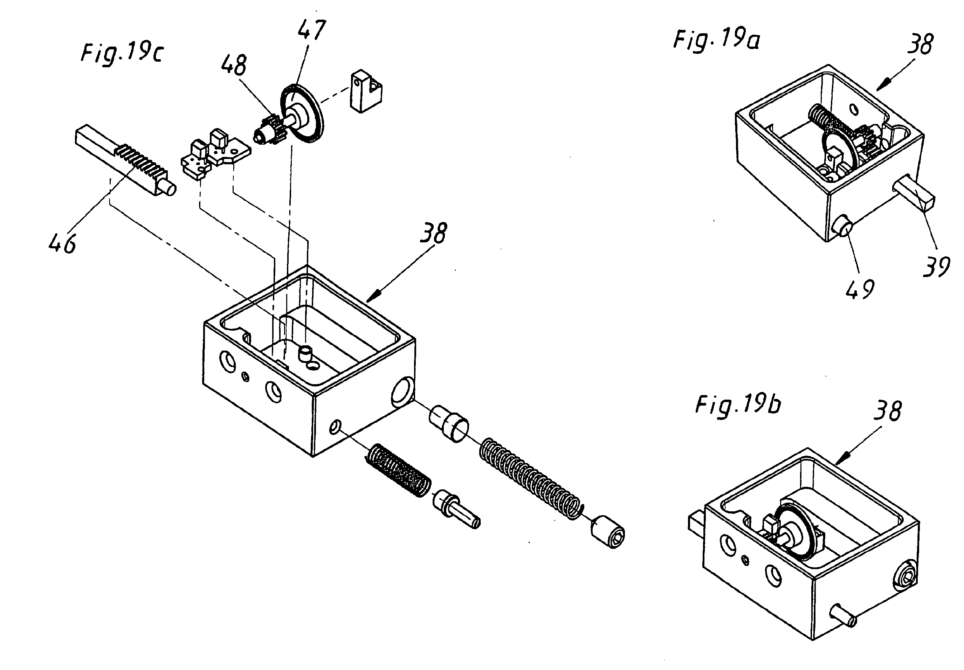

In den Fig. 19a bis 19c ist die in Fig. 18 gezeigte Wegmesseinrichtung 38 im Detail dargestellt. Erkennbar ist, dass der Stößel 39 im hinteren Bereich als Zahnstange 46 ausgebildet ist und ein mit der Scheibe 47 des Encoders 45 verbundenes Ritzel 48 kämmt. Erkennbar ist weiters ein gefederter Anschlag 49, der die Wegmessung bei einem in seiner geschlossenen Endlage befindlichen bewegbaren Möbelteil 2 gestattet, wenn dieses durch einen Benutzer über das verbleibende Spiel zur Auslösung in Richtung des Möbelkorpus 3 gedrückt wird.

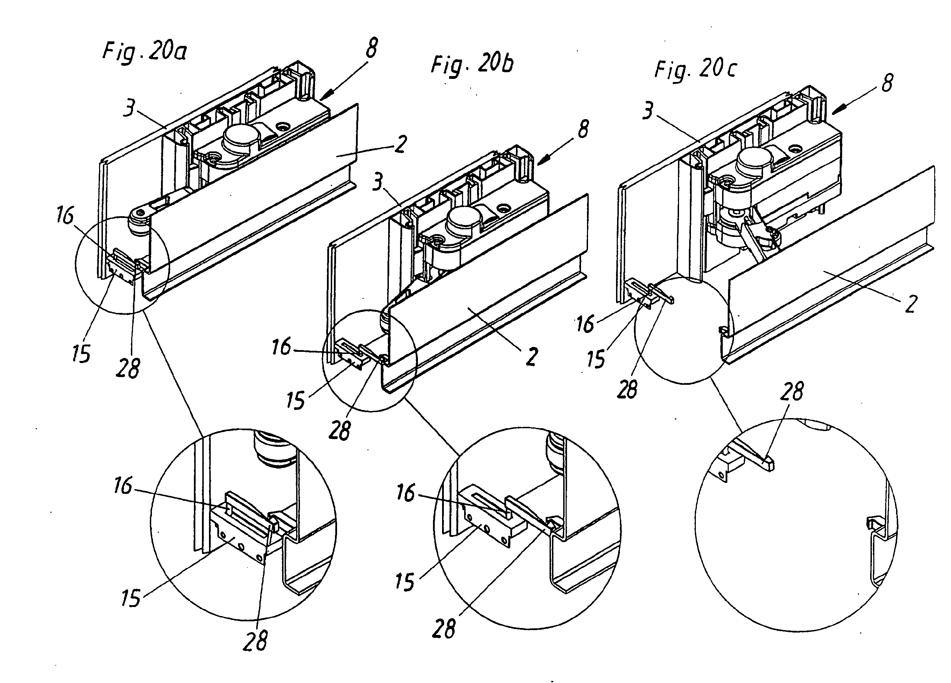

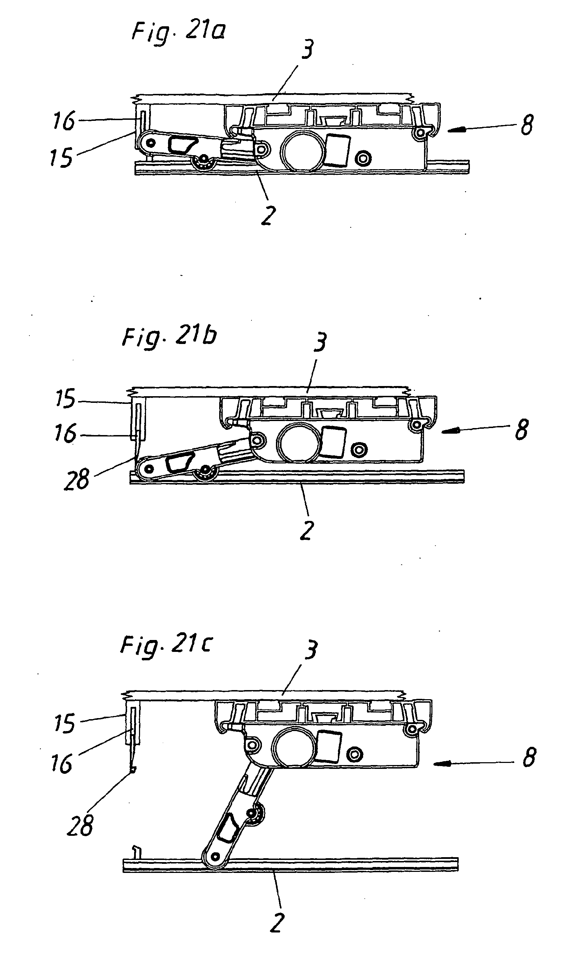

In den Fig. 20a bis 20c ist ein weiteres Ausführungsbeispiel einer erfindungsgemäßen Ausstoßvorrichtung 8 erkennbar, welches sich durch ein am Möbelkorpus 3 angeordnetes Potentiometer 15 auszeichnet. Das Stellglied 16 des Potentiometers 15 ist über einen Mitnehmer 28 mit der Rückseite eines bewegbaren Möbelteils 2 verbunden. Das Herausbewegen des bewegbaren Möbelteils 2 aus seiner geschlossenen Endlage nimmt über die Mitnehmer 28 das Stellglied 16 des Potentiometers 15 mit, worauf das Potentiometer 15 die Ausstoßung des bewegbaren Möbelteils 2 durch die Ausstoßvorrichtung 8 befiehlt. Dieser Vorgang ist in den Fig. 21a bis 21c in einer Draufsicht dargestellt.

## Patentansprüche

1. Ausstoßvorrichtung für ein in oder an einem Möbelkorpus bewegbar gelagertes Möbelteil, mit einem schwenkbar gelagerten Hebel, wobei am freien Hebelende eine erste Laufrolle angeordnet ist, **dadurch gekennzeichnet, dass** am Hebel (4) beabstandet vom freien Hebelende (9) eine zweite Laufrolle (11) angeordnet ist.

2. Ausstoßvorrichtung nach Anspruch 1, **dadurch gekennzeichnet, dass** die zweite Laufrolle (11) in einem Abstand von annähernd einer halben Hebellänge vom freien Hebelende (9) am Hebel (4) angeordnet ist.

3. Ausstoßvorrichtung für ein in oder an einem Möbelkorpus bewegbar gelagertes Möbelteil, nach Anspruch 1 oder 2, mit einem schwenkbar gelagerten Hebel und einer insbesondere elektrischen Antriebseinheit zum Antreiben des Hebels, **dadurch gekennzeichnet, dass** der Hebel (4) wenigstens einen ersten Hebelteil (20) und einen zweiten Hebelteil (21) aufweist, wobei der erste Hebelteil (20) mit dem bewegbaren Möbelteil (2) kontaktierbar ist und der zweite Hebelteil (21) durch die Antriebseinheit (5) antreibbar ist und dass der erste Hebelteil (20) mit dem zweiten Hebelteil (21) begrenzt bewegbar gekoppelt ist, wobei der erste Hebelteil (20) in Bezug auf den zweiten Hebelteil (21) durch einen Kraftspeicher vorgespannt ist.

4. Ausstoßvorrichtung nach Anspruch 3, **dadurch gekennzeichnet, dass** der erste Hebelteil (20) in Bezug auf den zweiten Hebelteil (21) durch eine Feder (18) vorgespannt ist.

5. Ausstoßvorrichtung nach Anspruch 3 oder 4, **dadurch gekennzeichnet, dass** am ersten Hebelteil (20) ein Antriebsrad (22) für ein Potentiometer (15) ausgebildet ist.

6. Ausstoßvorrichtung nach Anspruch 5, **dadurch gekennzeichnet, dass** die Ausstoßvorrichtung (8) ein Potentiometer (15) umfasst, wobei die Signale des Potentiometers (15) wenigstens der Steuer- bzw. Regeleinrichtung (6) zuführbar sind und dass das Stellglied (16) des Potentiometers (15) mit dem ersten Hebelteil (20) gekoppelt ist.

7. Ausstoßvorrichtung für ein in oder an einem Möbelkorpus bewegbar gelagertes Möbelteil, nach einem der Ansprüche 1 bis 6, mit einem schwenkbar gelagerten Hebel zum Ausstoßen des bewegbaren Möbelteils, einer insbesondere elektrischen Antriebseinheit zum Antreiben des Hebels und einer Steuer- bzw. Regeleinrichtung zum Steuern bzw. Regeln der Antriebseinheit, **dadurch gekennzeichnet, dass** am oder im Hebel (4) ein Schalter (7) zum Auslösen der Ausstoßvorrichtung (8) angeordnet ist, wobei die Signale des Schalters (7) wenigstens der Steuer- bzw. Regeleinrichtung (6) zuführbar sind.

8. Ausstoßvorrichtung nach Anspruch 7, **dadurch gekennzeichnet, dass** der Schalter (7) wenigstens zwei Kontakte (26, 27) aufweist, wobei der erste Kontakt (27) am ersten Hebelteil (20) und der zweite Kontakt (26) am zweiten Hebelteil (21) angeordnet ist.

9. Ausstoßvorrichtung nach Anspruch 7, **dadurch gekennzeichnet, dass** der Schalter (7) einen Druckschalter umfasst.

10. Ausstoßvorrichtung nach Anspruch 9, **dadurch gekennzeichnet, dass** der Druckschalter am freien Hebelende (9) angeordnet ist.

11. Ausstoßvorrichtung für ein in oder an einem Möbelkorpus bewegbar gelagertes Möbelteil, nach einem der Ansprüche 1 bis 10, mit einem Ausstoßer zum Ausstoßen des bewegbaren Möbelteils, einer insbesondere elektrischen Antriebseinheit, einem Getriebe zur Kraftübertragung von der Antriebseinheit auf den Ausstoßer und einer Steuer- bzw. Regeleinrichtung zum Steuern bzw. Regeln der Antriebseinheit, **dadurch gekennzeichnet, dass** die Ausstoßvorrichtung (8) ein Potentiometer (15) umfasst, wobei die Signale des Potentiometers (15) wenigstens der Steuer- bzw. Regeleinrichtung (6) zuführbar sind und dass das Stellglied (16) des Potentiometers (15) mit dem Getriebe (13) gekoppelt ist.

12. Ausstoßvorrichtung nach Anspruch 11, **dadurch gekennzeichnet, dass** der Ausstoßer einen Hebel (4) umfasst.

13. Ausstoßvorrichtung nach Anspruch 12, **dadurch gekennzeichnet, dass** der Abtrieb (17) des Getriebes (13) einstückig mit dem Hebel (4) ausgebildet ist.

14. Ausstoßvorrichtung nach Anspruch 13, **dadurch gekennzeichnet, dass** das Stellglied (16) des Potentiometers (15) mit dem Hebel (4) gekoppelt ist.

15. Ausstoßvorrichtung nach einem der Ansprüche 11 bis 14, **dadurch gekennzeichnet, dass** das Potentiometer (15) als Drehpotentiometer ausgebildet ist.

16. Ausstoßvorrichtung für ein in oder an einem Möbelkorpus bewegbar gelagertes Möbelteil, nach einem der Ansprüche 1 bis 15, mit einem Ausstoßer zum Ausstoßen des bewegbaren Möbelteils, einer insbesondere elektrischen Antriebseinheit und einem Getriebe zur Kraftübertragung von der Antriebseinheit auf den Ausstoßer, **dadurch gekennzeichnet, dass** das Getriebe (13) eine Rutschkupplung (14) umfasst.

17. Möbel mit einem bewegbaren Möbelteil, insbesondere Schublade oder Türe, **gekennzeichnet durch** eine Ausstoßvorrichtung (8) nach einem der Ansprüche 1 bis 16.

18. Möbel nach Anspruch 17, **dadurch gekennzeichnet, dass** am bzw. im Möbel (1) eine Wegmesseinrichtung (38) angeordnet ist und dass die Ausstoßvorrichtung (8) durch die Wegmesseinrichtung (38) auslösbar ist.

19. Möbel nach Anspruch 18, **dadurch gekennzeichnet, dass** die Wegmesseinrichtung (38) an bzw. in der Ausstoßvorrichtung (8) angeordnet ist.

20. Möbel nach Anspruch 18, **dadurch gekennzeichnet, dass** die Wegmesseinrichtung (38) an bzw. im Möbelkorpus (3) angeordnet ist.

21. Möbel nach einem der Ansprüche 18 bis 20, **dadurch gekennzeichnet, dass** die Wegmesseinrichtung (38) einen vom bewegbaren Möbelteil (2) beaufschlagbaren Stößel (39) umfasst.

22. Möbel nach einem der Ansprüche 18 bis 21, **dadurch gekennzeichnet, dass** die Wegmesseinrichtung (38) einen mit dem bewegbaren Möbelteil (2) koppelbaren Mitnehmer (28) aufweist.

23. Möbel nach einem der Ansprüche 18 bis 22, **dadurch gekennzeichnet, dass** die Wegmesseinrichtung (38) einen Encoder (39) umfasst.

24. Möbel nach einem der Ansprüche 18 bis 22, **dadurch gekennzeichnet, dass** die Wegmesseinrichtung (38) ein Potentiometer (15) umfasst.

25. Möbel nach einem der Ansprüche 18 bis 24, **dadurch gekennzeichnet, dass** die Wegmesseinrichtung (38) einen gefederten Anschlag (49) aufweist, der die Wegmessung bei einem in seiner geschlossenen Endlage befindlichen bewegbaren Möbelteil (2) gestattet.

## Claims

1. Ejection device for a furniture component housed movable in or against a furniture body, with a swivellably housed lever, wherein a first castor is attached to the free lever end, **characterized in that** a second castor (11) is attached to the lever (4) at a distance from the free lever end (9).

2. Ejection device according to claim 1, **characterized in that** the second castor (11) is attached to the lever (4) at a distance of approximately half the length of one lever from the free lever end (9).

3. Ejection device for a furniture component housed movable in or against a furniture body, according to claim 1 or 2, with a swivellably housed lever and an electric drive unit, in particular electric, to drive the lever, **characterized in that** the lever (4) has at least a first lever part (20) and a second lever part (21), wherein the first lever part (20) can be brought into contact with the movable furniture component (2) and the second lever part (21) can be driven by the drive unit (5) and the first lever part (20) is coupled, movable to a limited extent, to the second lever part (21), wherein the first lever part (20) is pre-loaded by an energy accumulator in relation to the second lever part (21).

4. Ejection device according to claim 3, **characterized in that** the first lever part (20) is pre-loaded in by a spring (18) in relation to the second lever part (21).

5. Ejection device according to claim 3 or 4, **characterized in that** the driving wheel (22) for a potentiometer (15) is formed on the first lever part (20).

6. Ejection device according to claim 5, **characterized in that** the ejection device (8) has a potentiometer (15) wherein signals of the potentiometer (15) can be fed at least to the control or regulation apparatus (6) and **in that** the actuator (16) of the potentiometer (15) is coupled with the first lever part (20).

7. Ejection device for a furniture component housed movable in or against a furniture body, according to one of claims 1 to 6, with a swivellably housed lever to eject the movable furniture component, an electric drive unit, in particular electric, to drive the lever and a control or regulation apparatus to control or regulate the drive unit, **characterized in that** a switch (7) for the actuation of the ejection device (8) is attached to or in the lever (4), wherein the signals from the switch (7) can be fed at least to the control or regulation apparatus (6).

8. Ejection device according to claim 7, **characterized in that** the switch (7) has at least two contacts (26, 27), wherein the first contact (27) is attached to the first lever part (20) and the second contact (26) to the second lever part (21).

9. Ejection device according to claim 7, **characterized in that** the switch (7) comprises a push switch.

10. Ejection device according to claim 9, **characterized in that** the push switch is attached to the free lever end (9).

11. Ejection device for a furniture component housed movable in or against a furniture body, according to one of claims 1 to 10, with an ejector to eject the movable furniture component, an electric drive unit, electric in particular, a gear mechanism to transmit power from the drive unit to the ejector and a control or regulation apparatus to control or regulate the drive unit, **characterized in that** the ejection device (8) comprises a potentiometer (15), wherein the signals from the potentiometer (15) can be fed at least to the control or regulation apparatus (6), and the actuator (16) of the potentiometer (15) is coupled to the gear mechanism (13).

12. Ejection device according to claim 11, **characterized in that** the ejector comprises a lever (4).

13. Ejection device according to claim 12, **characterized in that** the drive (17) of the gear mechanism (13) is formed in one piece with the lever (4).

14. Ejection device according to claim 13, **characterized in that** the actuator (16) of the potentiometer (15) is coupled with the lever (4).

15. Ejection device according to one of claims 11 to 14, **characterized in that** the inner pipe (15) is formed as a rotary potentiometer.

16. Ejection device for a furniture component housed movable in or against a furniture body, according to one of claims 1 to 15, with an ejector to eject the movable furniture component, an electric drive unit, in particular electric, and a gear mechanism to transmit power from the drive unit to the ejector, **characterized in that** the gear mechanism (13) comprises a slipping clutch (14).

17. Item of furniture with a movable furniture component, in particular drawer or door, **characterized by** an ejection device (8) according to one of claims 1 to 16.

18. Item of furniture according to claim 17, **characterized in that** a path-measuring device (38) is attached to or in the item of furniture (1) and the ejection device (8) can be actuated by the path-measuring device (38).

19. Item of furniture according to claim 18, **characterized in that** the path-measuring device (38) is attached to or in the ejection device (8).

20. Item of furniture according to claim 18, **characterized in that** the path-measuring device (38) is attached to or in the furniture body (3).

21. Item of furniture according to one of claims 18 to 20, **characterized in that** the path-measuring device (38) comprises a pusher (39) to which pressure can be applied by the movable furniture component (2).

22. Item of furniture according to one of claims 18 to 21, **characterized in that** the path-measuring device (38) has a drive carrier (28) which can be coupled with the movable furniture component (2).

23. Item of furniture according to one of claims 18 to 22, **characterized in that** the path-measuring device (38) comprises an encoder (39).

24. Item of furniture according to one of claims 18 to 22, **characterized in that** the path-measuring device (38) comprises a potentiometer (15).

25. Item of furniture according to one of claims 18 to 24, **characterized in that** the path-measuring device (38) has a spring-loaded stop (49) which enables the path to be measured when a movable furniture component (2) is in its closed end-position.

## Revendications

1. Dispositif d'éjection pour une pièce de meuble montée de manière mobile dans ou sur un corps de meuble, avec un levier monté tournant, un premier galet de roulement étant monté sur l'extrémité de levier libre, **caractérisé en ce qu'**un deuxième galet de roulement (11) est disposé sur le levier (4), à distance de l'extrémité de levier (9) libre.

2. Dispositif d'éjection selon la revendication 1, **caractérisé en ce que** le deuxième galet de roulement (11) est disposé à une distance d'à peu près une demi-longueur de levier de l'extrémité de levier (9) libre, sur le levier (4).

3. Dispositif d'éjection pour une pièce de meuble montée de manière mobile dans ou sur un corps de meuble selon la revendication 1 ou 2, avec un levier monté tournant, et une unité d'entraînement, en particulier électrique, pour assurer l'entraînement du levier, **caractérisé en ce que** levier (4) présente au moins une première partie de levier (20) et une deuxième partie de levier (21), la première partie de levier (20) étant susceptible d'être mise en contact avec la partie de meuble (2) mobile, et la deuxième partie de levier (21) étant susceptible d'être entraînée par l'unité d'entraînement (5), et **en ce que** la première partie de levier (20) est couplée, avec une possibilité de déplacement limitée, à la deuxième partie de levier (21), la première partie de levier (20) étant précontrainte par rapport à la deuxième partie de levier (21), au moyen d'un accumulateur de force.

4. Dispositif d'éjection selon la revendication 3, **caractérisé en ce que** la première partie de levier (20) est précontrainte par rapport à la deuxième partie de levier (21), au moyen d'un ressort (18).

5. Dispositif d'éjection selon la revendication 3 ou 4, **caractérisé en ce que**, sur la première partie de levier (20), une roue d'entraînement (22) est réalisée pour un potentiomètre (15).

6. Dispositif d'éjection selon la revendication 5, **caractérisé en ce que** le dispositif d'éjection (8) comprend un potentiomètre (15), les signaux du potentiomètre (15) étant susceptibles d'être amenés au moins au dispositif de commande ou de régulation (6), et **en ce que** l'organe de réglage (16) du potentiomètre (15) est couplé à la première partie de levier (20).

7. Dispositif d'éjection pour une pièce de meuble montée de manière mobile dans ou sur un corps de meuble selon l'une des revendications 1 à 6, avec un levier monté tournant, pour l'éjection de la pièce de meuble mobile, une unité d'entraînement, en particulier électrique, pour entraîner le levier, et un dispositif de commande ou de régulation, pour commander ou réguler l'unité d'entraînement, **caractérisé en ce qu'**un interrupteur (7) pour déclencher le dispositif d'éjection (8) est disposé sur ou dans le levier (4), les signaux de l'interrupteur (7) étant susceptibles d'être amenés au moins au dispositif de commande ou de régulation (6).

8. Dispositif d'éjection selon la revendication 7, **caractérisé en ce que** l'interrupteur (7) présente au moins deux contacts (26, 27), le premier contact (27) étant disposé sur la première partie de levier (20) et le deuxième contact (26) étant disposé sur la deuxième partie de levier (21).

9. Dispositif d'éjection selon la revendication 7, **caractérisé en ce que** l'interrupteur (7) est un manostat.

10. Dispositif d'éjection selon la revendication 9, **caractérisé en ce que** le manostat est disposé sur l'extrémité de levier (9) libre.

11. Dispositif d'éjection pour une pièce de meuble montée de manière mobile dans ou sur un corps de meuble selon l'une des revendications 1 à 10, avec un éjecteur pour éjecter la pièce de meuble mobile, une unité d'entraînement, en particulier électrique, une transmission pour assurer la transmission de force de l'unité d'entraînement à l'éjecteur, et un dispositif de commande ou de régulation pour commander ou réguler l'unité d'entraînement, **caractérisé en ce que** le dispositif d'éjection (8) comprend un potentiomètre (15), les signaux du potentiomètre (15) étant susceptibles d'être amenés au moins au dispositif de commande ou de régulation (6), et **en ce que** l'organe de réglage (16) du potentiomètre (15) est couplé à la transmission (13).

12. Dispositif d'éjection selon la revendication 11, **caractérisé en ce que** l'éjecteur comprend un levier (4).

13. Dispositif d'éjection selon la revendication 12, **caractérisé en ce que** la partie menée (17) de la transmission (13) est réalisée d'une seule pièce avec le levier (4).

14. Dispositif d'éjection selon la revendication 13, **caractérisé en ce que** l'organe de réglage (16) du potentiomètre (15) est couplé au levier (4).

15. Dispositif d'éjection selon l'une des revendications 1 à 14, **caractérisé en ce que** le potentiomètre (15) est réalisé sous forme de potentiomètre tournant.

16. Dispositif d'éjection pour une pièce de meuble montée de manière mobile dans ou sur un corps de meuble selon l'une des revendications 1 à 15, avec un éjecteur pour éjecter la pièce de meuble mobile, une unité d'entraînement, en particulier électrique, et une transmission pour assurer la transmission de force de l'unité d'entraînement à l'éjecteur, **caractérisé en ce que** la transmission (13) comprend un accouplement à friction (14).

17. Meuble avec une pièce de meuble mobile, en particulier tiroir ou porte, **caractérisé par** un dispositif d'éjection (8) selon l'une des revendications 1 à 16.

18. Meuble selon la revendication 17, **caractérisé en ce qu'**un dispositif de mesure de course de déplacement (38) est disposé sur ou dans le meuble (1), et **en ce que** le dispositif d'éjection (8) est susceptible d'être déclenché par le dispositif de mesure de course de déplacement (38).

19. Meuble selon la revendication 18, **caractérisé en ce que** le dispositif de mesure de course de déplacement (38) est disposé sur ou dans le dispositif d'éjection (8).

20. Meuble selon la revendication 18, **caractérisé en ce que** le dispositif de mesure de course de déplacement (38) est disposé sur ou dans le corps de meuble (3).

21. Meuble selon l'une des revendications 18 à 20, **caractérisé en ce que** le dispositif de mesure de course de déplacement (38) comprend un poussoir (39) susceptible d'être sollicité par la pièce de meuble (2) mobile.

22. Meuble selon l'une des revendications 18 à 21, **caractérisé en ce que** le dispositif de mesure de course de déplacement (38) présente un organe d'entraînement (28) susceptible d'être couplé à la pièce de meuble (2) mobile.

23. Meuble selon l'une des revendications 18 à 22, **caractérisé en ce que** le dispositif de mesure de course de déplacement (38) comprend un codeur (39).

24. Meuble selon l'une des revendications 18 à 22, **caractérisé en ce que** le dispositif de mesure de course de déplacement (38) comprend un potentiomètre (15).

25. Meuble selon l'une des revendications 18 à 24, **caractérisé en ce que** le dispositif de mesure de course de déplacement (38) présente une butée (49) montée élastiquement, permettant la mesure de course de déplacement dans le cas d'une pièce de meuble (2) mobile se trouvant à sa position finale fermée.
